# EUROPEAN PATENT SPECIFICATION

(11) **EP 2 683 844 B1**
(45) Date of publication and mention of the grant of the patent: **08.05.2019**
(21) Application number: 12719105.4
(22) Date of filing: 08.03.2012
(51) Int. Cl.: C23C 4/10, C23C 28/04, C23C 30/00, C04B 41/87, C04B 41/89, C04B 41/00, C04B 41/50, C04B 41/52, F01D 11/12, C23C 4/11

(54) **ABRADABLE LAYER**
ABREIBBARE SCHICHT
COUCHE ABRADABLE

(30) Priority: 09.03.2011 US 201161450983 P
(43) Date of publication of application: 15.01.2014
(73) Proprietor: Rolls-Royce Corporation, Indianapolis, IN 46241 (US)
(72) Inventor: LEE, Kang N, Zionsville, Indiana 46077 (US)
(74) Representative: HGF Limited
(86) International application number: PCT/US2012/028274
(87) International publication number: WO 2012/122373

(56) References cited:
- EP-A1- 2 194 164
- EP-A2- 2 192 098
- WO-A1-2009/091724

## Description

### TECHNICAL FIELD

The disclosure relates to abradable coatings.

### BACKGROUND

Components of high-temperature mechanical systems, such as, for example, gas-turbine engines, operate in severe environments. For example, the high-pressure turbine blades, vanes, blade tracks and blade shrouds exposed to hot gases in commercial aeronautical engines may experience metal surface temperatures of about 1000°C, with short-term peaks as high as 1100°C.

Components of high-temperature mechanical systems may include a Ni- or Co-based superalloy substrate, a ceramic substrate, or a ceramic matrix composite (CMC) substrate. Some ceramics or CMCs possess excellent high temperature mechanical, physical and chemical properties, and may allow gas turbine engines to operate at higher temperatures than gas turbine engines having superalloy components.

In addition to raising the inlet temperature, gas turbine power and efficiency also may be improved by reducing a gap between a tip of a gas turbine blade and a surrounding blade track or blade shroud. One method of reducing the gap between blade and track or shroud includes coating the blade track or blade shroud with an abradable layer. As the turbine blade rotates, the tip of the turbine blade contacts the abradable layer and wears away a portion of the layer to form a groove in the abradable layer corresponding to an approximate path of the turbine blade. The fit between the blade and abradable layer may provide a seal, which may reduce or eliminate leakage of gas around the blade tip and increase the efficiency of the gas turbine engine by up to 5% in some cases.

EP2194164 A1 describes a multilayer thermal barrier coating that includes at least two layers. The layers may be selected to provide properties such as thermal cycling resistance, low thermal conductivity, and at least one of erosion resistance and calcia-magnesia-alumina-silicate (CMAS) resistance to an article.

WO 2009/091724 A1 describes a thermal barrier coating composition that includes a base oxide, a primary dopant including ytterbia, a first co-dopant including samaria, and a second co-dopant including at least one of lutetia, scandia, ceria, gadolinia, neodymian, or europia.

EP 2192098 A2 describes an abradable coating that includes a rare earth silicate. In some examples, the abradable coating includes a plurality of layers, such as alternating first and second layers including, respectively, a rare earth silicate and stabilized zirconia or stabilized hafnia.

### SUMMARY

In general, the present disclosure is directed to an abradable layer that may be applied over a blade track or blade shroud. The abradable layer includes a base oxide and at least three rare earth oxides. The base oxide is zirconia or hafnia. The at least three rare earth oxides include a primary dopant, a first co-dopant, and a second co-dopant. The primary dopant includes ytterbia, the first co-dopant includes samaria, and the second co-dopant includes at least one of lutetia, scandia, ceria, gadolinia, neodymia, or europia. The abradable layer is free of yttria. The abradable layer is porous, and comprises a porosity between about 25 vol. % and about 50 vol. %.

In one aspect, there is provided a system as defined in claim 1 of the appended claims.

This aspect is directed to a system that includes a blade track or blade shroud and a gas turbine blade comprising a blade tip. In accordance with this aspect of the disclosure, the blade track or blade shroud includes a substrate and an abradable layer formed over the substrate. The abradable layer includes at least one of zirconia or hafnia; ytterbia; samaria; and at least one of lutetia, scandia, ceria, gadolinia, neodymia, or europia. According to this aspect of the disclosure, the abradable layer includes a porosity between about 25 vol. % and about 50 vol. %. The blade track or blade shroud and the gas turbine blade are configured so the blade tip contacts a portion of the abradable layer during rotation of the gas turbine blade, and the abradable layer is configured to be abraded by the contact by the blade tip.

In another aspect, there is provided a method as defined in claim 11 of the appended claims.

This aspect is directed to a method that includes forming an abradable layer over a substrate of a blade track or a blade shroud using a thermal spraying technique. The abradable includes at least one of zirconia or hafnia; ytterbia; samaria; and at least one of lutetia, scandia, ceria, gadolinia, neodymia, or europia. According to this aspect of the disclosure, the abradable layer includes a porosity between about 25 vol. % and about 50 vol. %. The method may further include configuring a blade tip of a gas turbine blade relative to the blade track or blade shroud so the blade tip contacts a portion of the abradable layer during rotation of the gas turbine blade. The method also may include rotating the gas turbine blade to cause the blade tip to contact and abrade the portion of the abradable layer.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual cross-sectional diagram that illustrates an example of an article that includes an abradable layer formed on a substrate.
FIG. 2 is a conceptual cross-sectional diagram that illustrates an example of an article that includes a bond layer formed on a substrate and an abradable layer formed on the bond layer.
FIG. 3 is a conceptual cross-sectional diagram that illustrates an example of an article that includes an environmental barrier layer formed on a substrate and an abradable layer formed on the environmental barrier layer.
FIG. 4 is a conceptual cross-sectional diagram that illustrates an example of an article that includes a CMAS-resistant layer formed on a substrate and an abradable layer formed on the CMAS-resistant layer.
FIG. 5 is a conceptual cross-sectional diagram that illustrates an example of an article that includes an abradable layer formed on a substrate and a CMAS-resistant layer formed on the abradable layer.
FIG. 6 is a conceptual cross-sectional diagram that illustrates an example of an article that includes a first abradable layer formed on a substrate and a second abradable layer formed on the first abradable layer.
FIG. 7 is a conceptual cross-sectional diagram that illustrates an example of an article that includes features formed on a surface of a substrate and an abradable layer formed on the surface of the substrate.
FIG. 8 is a conceptual cross-sectional diagram that illustrates an example of an article that includes a feature layer formed on a substrate, features formed on a surface of the feature layer, and an abradable layer formed on the feature layer.
FIG. 9 is a conceptual diagram illustrating an example gas turbine blade and a gas turbine blade track or gas turbine blade shroud.
FIG. 10 is a micrograph of a cross-section of an example substrate coated with a silicon bond coat, an environmental barrier layer, a first abradable layer, and a second abradable layer.

### DETAILED DESCRIPTION

In general, the present disclosure is directed to an abradable layer that may be applied over a blade track or blade shroud. The abradable layer includes a base oxide, a primary dopant, a first co-dopant, and a second co-dopant. The primary dopant, first co-dopant, and second co-dopant are rare earth oxides. The base oxide is zirconia or hafnia. The primary dopant is ytterbia, the first co-dopant is samaria, and the second co-dopant is at least one of lutetia, scandia, ceria, gadolinia, neodymia, or europia. Additionally, the abradable layer is free of yttria. The abradable layer is porous, and includes porosity between about 25 vol. % and about 50 vol. %. In some examples, the abradable layer may be formed over at least one other layer, such as a bond layer, an environmental barrier layer, a calcia-magnesia-alumina-silicate (CMAS)-resistant layer, or another abradable layer. In some examples, another layer may be formed on the abradable layer, such as a CMAS-resistant layer or another abradable layer.

The abradable layer may provide a seal between the blade track or blade shroud and a gas turbine blade. The gas turbine blade may intentionally contact and abrade at least a portion of the abradable layer to form a groove in the abradable layer corresponding to the path of the turbine blade. This allows contact between the turbine blade and abradable layer while also allowing the turbine blade to rotate freely. In addition, the abradable layer may be usable in any high temperature system where rubber or other polymeric seals would degrade.

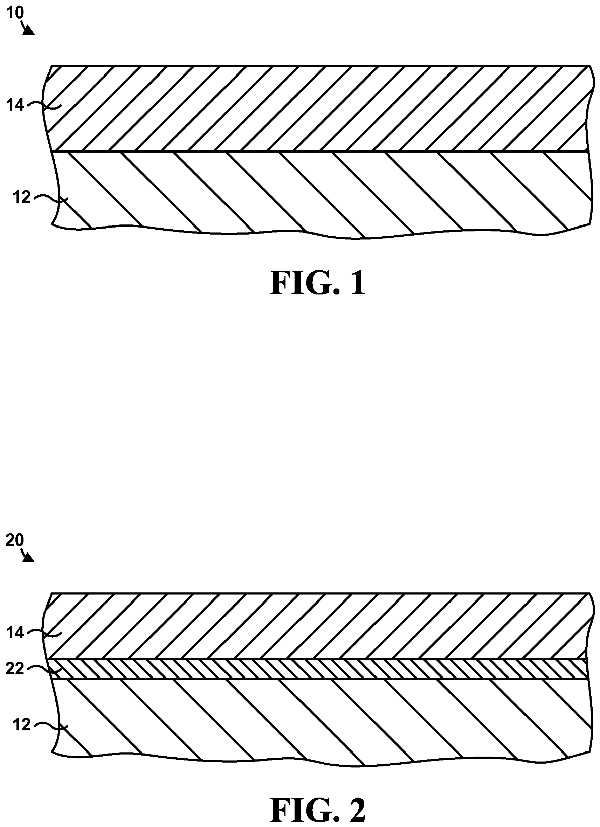

FIG. 1 is a block diagram that illustrates an example of an article 10 that includes an abradable layer 14 formed on a substrate 12. Article 10 may be a component of a high temperature mechanical system, such as, for example, a gas turbine engine or the like. In some embodiments, article 10 may include a gas turbine blade track or gas turbine blade shroud. However, while the following description will be directed primarily to a gas turbine blade track, it will be understood that the disclosure is not limited to such embodiments. Rather, abradable layer 14 may be formed over any article which requires or may benefit from an abradable layer 14. For example, abradable layer 14 may be formed on a cylinder of an internal combustion engine, an industrial pump, a housing or internal seal ring of an air compressor, or an electric power turbine.

In some embodiments, as illustrated in FIG. 1, abradable layer 14 may be formed directly on substrate 12. In other embodiments, abradable layer 14 may be formed over substrate 102, with one or more intermediate layer between abradable layer 14 and substrate 12, as illustrated in FIGS. 2-4, 6, and 8. As used herein, "formed over" means a layer or coating that is formed on top of another layer or coating, and encompasses both a first layer or coating formed immediately adjacent a second layer or coating and a first layer or coating formed on top of a second layer or coating with one or more intermediate layer or coating present between the first and second layers or coatings. In contrast, "formed directly on" and "formed on" denote a layer or coating that is formed immediately adjacent another layer or coating, i.e., there are no intermediate layers or coatings.

Substrate 12 is a component of a high temperature mechanical system, such as, for example, a gas turbine engine or the like. In some embodiments, substrate 12 includes a superalloy, while in other embodiments, substrate 12 includes a ceramic or ceramic matrix composite (CMC). When substrate 12 includes a superalloy, substrate 12 may include an alloy based on Ni, Co, Ni/Fe, or the like. When substrate 12 includes a superalloy, substrate 12 may include other additive elements to alter its mechanical properties, such as toughness, hardness, temperature stability, corrosion resistance, oxidation resistance, and the like, as is well known in the art. Any useful superalloy may be utilized in substrate 12, including, for example, those available from Martin-Marietta Corp., Bethesda, MD, under the trade designation MAR-M247; those available from Cannon-Muskegon Corp., Muskegon, MI, under the trade designations CMSX-4 and CMSX-10; and the like.

In other embodiments, substrate 12 includes a ceramic or CMC. In embodiments in which substrate 12 includes a ceramic, the ceramic may be substantially homogeneous. In some embodiments, a substrate 12 that includes a ceramic includes, for example, a silicon-containing ceramic, such as silica (SiO₂), silicon carbide (SiC) or silicon nitride (Si₃N₄), alumina (Al₂O₃), aluminosilicate, or the like. In other embodiments, substrate 12 includes a metal alloy that includes silicon, such as a molybdenum-silicon alloy (e.g., MoSi₂) or a niobium-silicon alloy (e.g., NbSi₂).

In embodiments in which substrate 12 includes a CMC, substrate 12 includes a matrix material and a reinforcement material. The matrix material includes a ceramic material, such as, for example, silicon carbide, silicon nitride, alumina, aluminosilicate, silica, or the like. The CMC further includes a continuous or discontinuous reinforcement material. For example, the reinforcement material may include discontinuous whiskers, platelets, or particulates. As other examples, the reinforcement material may include a continuous monofilament or multifilament weave.

The composition, shape, size, and the like of the reinforcement material may be selected to provide the desired properties to the substrate 12 including the CMC. In some embodiments, the reinforcement material is chosen to increase the toughness of a brittle matrix material. The reinforcement material may additionally or alternatively be chosen to modify a thermal conductivity, electrical conductivity, thermal expansion coefficient, hardness, or the like of a substrate 12 including a CMC.

In some embodiments, the composition of the reinforcement material is the same as the composition of the matrix material. For example, a matrix material comprising silicon carbide may surround a reinforcement material comprising silicon carbide whiskers. In other embodiments, the reinforcement material includes a different composition than the composition of the matrix material, such as aluminosilicate fibers in an alumina matrix, or the like. One composition of a substrate 12 that comprises a CMC includes a reinforcement material comprising silicon carbide continuous fibers embedded in a matrix material comprising silicon carbide.

Some example CMCs used for substrate 12 include composites of SiC or Si₃N₄ and silicon oxynitride or silicon aluminum oxynitride, and oxide-oxide ceramics, such as a matrix material of alumina or aluminosilicate and a reinforcement material comprising NEXTEL™ Ceramic Oxide Fiber 720 (available from 3M Co., St. Paul, MN).

Abradable layer 14 may include a material that provides at least one of erosion resistance, abradability, corrosion resistance, thermal shock resistance, manufacturability, or high temperature capability. For example, abradability may include a disposition to break into relatively small pieces when exposed to a sufficient physical force. Abradability may be influenced by the material characteristics of abradable layer 14, such as fracture toughness and fracture mechanism (e.g., brittle fracture), as well as the porosity of abradable layer 14. Thermal shock resistance and high temperature capability may be important for use in a gas turbine engine, in which abradable layer 14 is exposed to wide temperature variations from high operating temperatures to low environmental temperatures when the gas turbine engine is not operating.

In addition to at least some of the above properties, abradable layer 14 may possess other properties. For example, abradable layer 14 may be more resistant to reaction with calcia-magnesia-alumina-silicate (CMAS) material compared to conventional yttria-stabilized zirconia coatings. Alternatively or additionally, the abradable layer may provide thermal insulation to the substrate.

CMAS is a calcia-magnesia-alumina-silicate deposit resulting from the ingestion of siliceous minerals (dust, sand, volcanic ashes, runway debris, and the like) with the intake of air in gas turbine engines. Higher turbine inlet temperatures may lead to degradation of an abradable layer that includes yttria through a reaction with CMAS. Typical CMAS deposits have a melting point of about 1200°C to about 1250°C (about 2200°F to about 2300°F). As advanced engines may run at abradable layer surface temperatures above the CMAS melting point, the molten CMAS can penetrate the microstructural features in the abradable layer that induce abradability. CMAS may react with yttria in an abradable layer that includes yttria, preferentially along grain boundaries, leading to the destabilization of an abradable that includes yttria by precipitating material with lower yttria content. Both CMAS penetration and reaction with yttria may result in a shorter life before failure of the component due to higher thermal stresses. Thus, abradable layer 14 is free of yttria.

Abradable layer 14 may also provide thermal insulation to substrate 12. Abradable layer 14 may have a low thermal conductivity (both an intrinsic thermal conductivity of the material(s) that forms abradable layer 14 and an effective thermal conductivity of the abradable layer 14 as constructed). Heat is transferred through abradable layer 14 through conduction and radiation. The inclusion of rare earth oxides such as ytterbia, samaria, lutetia, scandia, ceria, gadolinia, neodymia, europia, and the like as dopants may help decrease the thermal conductivity (by conduction) of abradable layer 14. While not wishing to be bound by any specific theory, the inclusion of at least one of these dopant oxides in abradable layer 14 may reduce thermal conductivity through one or more mechanisms, as follows.

A first proposed mechanism of reducing thermal conductivity includes introducing lattice imperfections into the crystal structure of abradable layer 14. Lattice imperfections include defects in the crystalline lattice of abradable layer 14. The defects may be caused by the incorporation of dopants with differing ionic radii or different crystalline lattice types. Lattice imperfections may be broadly divided into two categories, point defects and larger defects, for the purposes of this discussion. The point defects, such as substitutional defects, interstitial defects, void defects, and the like, may scatter high frequency phonons (lattice waves), while larger defects, such as grain boundaries of crystals that are smaller than about 100 nm, may scatter lower frequency phonons. In either case, phonon scattering decreases the thermal conductivity of abradable layer 14 by reducing the mean free path of a phonon (i.e., the average distance the phonon travels between scattering sites).

Heavier rare earth oxide dopants are expected to lower the thermal conductivity more than lighter rare earth oxide dopants. For example, rare earth oxides including ytterbia, lutetia, gadolinia, samaria, neodymia, europia, and the like are expected to more effectively lower the thermal conductivity of abradable layer 14 than yttria.

Inclusion of certain rare earth elements in abradable layer 14 may also decrease the extent to which abradable layer 14 sinters at a given temperature. For example, incorporating rare earth elements with a larger ionic radius than yttrium can decrease the amount of sintering at a given temperature. While not wishing to be bound by any theory, a larger ionic radius can lead to a lower diffusion coefficient at a given temperature. As sintering is primarily a diffusion-related process, a lower diffusion coefficient lowers the amount of sintering at a given temperature.

Minimizing or eliminating sintering may significantly improve the stability of the thermal conductivity and/or abradablility of abradable layer 14 over the service life of abradable layer 14. Thermal conductivity of abradable layer 14 is typically lowered by forming abradable layer 14 as a porous structure. Similarly, abradability of abradable layer 14 may be increased by forming abradable layer 14 as a porous structure. The porosity of abradable layer 14 reduces the thermal conductivity by reducing the area through which heat is conducted and by providing a large refractive index difference between the pores and the material from which abradable layer 14 is made, which can reduce heat transfer by radiation. Sintering reduces the porosity of the structure, and thus increases the thermal conductivity (via both radiation and conduction) of abradable layer 14. Thus, preserving the porosity (i.e., reducing sintering) of abradable layer 14 over repeated thermal cycles may help maintain the thermal conductivity and/or abradability of abradable layer 14 at or near the level of the originally-applied abradable layer 14.

In order to accomplish at least some of the desired properties mentioned above, abradable layer 14 includes a composition that includes a base oxide, a primary dopant, a first co-dopant, and a second co-dopant. The base oxide includes or consists of zirconia and/or hafnia.

The primary dopant includes or consists essentially of ytterbia. The first co-dopant includes or consists essentially of samaria, and the second co-dopant includes or consists essentially of at least one of lutetia, scandia, ceria, gadolinia, neodymia, or europia. In some embodiments, abradable layer 14 may include zirconia and/or hafnia in combination with additive elements or compounds such that at least some of the stabilized zirconia or hafnia forms a metastable tetragonal-prime crystalline phase, a cubic crystalline phase, or a compound phase (RE₂Zr₂O₇ or RE₂Hf₂O₇, where RE is a rare earth element). Abradable layer 14 is free of yttria.

In some examples, abradable layer 14 consists essentially of a base oxide, a primary dopant, a first co-dopant, and a second co-dopant. The base oxide is selected from zirconia, hafnia, and combinations thereof. The primary dopant consists essentially of ytterbia. The first co-dopant consists essentially of samaria. The second co-dopant is selected from the group consisting of lutetia, scandia, ceria, gadolinia, neodymia, europia, or combinations thereof. Abradable layer 14 is free of yttria.

In some examples, the primary dopant is present in abradable layer 14 in an amount greater than either the first co-dopant or the second co-dopant. In various examples, the primary dopant may be present in an amount less than, equal to, or greater than the total amount of the first co-dopant and the second co-dopant.

Abradable layer 14 includes between about 2 mol. % and about 40 mol. % of the primary dopant. In some embodiments, abradable layer 14 includes between about 20 mol. % and about 40 mol. % of the primary dopant, between about 2 mol. % and about 20 mol. % of the primary dopant, between about 2 mol. % and about 10 mol. % of the primary dopant, between about 2 mol. % and about 5 mol. % of the primary dopant.

In some embodiments, abradable layer 14 includes between about 0.5 mol. % and about 20 mol. % of the first co-dopant. In other embodiments, abradable layer 14 includes between about 10 mol. % and about 20 mol. % of the first co-dopant, between about 2 mol. % and about 10 mol. % of the first co-dopant or between about 0.5 mol. % and about 3 mol. % of the first co-dopant.

In some embodiments, abradable layer 14 includes between about 0.5 mol. % and about 20 mol. % of the second co-dopant. In other embodiments, abradable layer 14 includes between about 10 mol. % and about 20 mol. % of the second co-dopant, between about 2 mol. % and about 10 mol. % of the second co-dopant, or between about 0.5 mol. % and about 3 mol. % of the second co-dopant.

The composition of abradable layer 14 provides a desired phase constitution. For an abradable layer 14 that includes zirconia and/or hafnia, a primary dopant, a first co-dopant, and a second co-dopant, accessible phase constitutions include metastable tetragonal-prime, cubic, and compound (RE₂Zr₂O₇ and RE₂Hf₂O₇, where RE is a rare earth element). To achieve a RE₂O₃-ZrO₂ (and/or HfO₂) compound phase constitution, abradable layer 14 includes between about 20 mol. % and about 40 mol. % primary dopant, between about 10 mol. % and about 20 mol. % first co-dopant, between about 10 mol. % and about 20 mol. % second co-dopant, and the balance base oxide (hafnia and/or zirconia) and any impurities present. To achieve a cubic phase constitution, abradable layer 14 includes between about 4 mol. % and about 10 mol. % primary dopant, between about 1 mol. % and about 5 mol. % first co-dopant, between about 1 mol. % and about 5 mol. % second co-dopant, and a balance base oxide (zirconia and/or hafnia) and any impurities present. In some embodiments, to achieve a metastable tetragonal phase constitution, abradable layer 14 includes between about 2 mol. % and about 5 mol. % primary dopant, between about 0.5 mol. % and about 3 mol. % first co-dopant, between about 0.5 mol. % and about 3 mol. % second co-dopant, and a balance base oxide and any impurities present.

Abradable layer 14 is formed as a porous structure. As described above, porosity of abradable layer 14 may reduce a thermal conductivity of abradable layer 14 and/or may affect the abradability of abradable layer 14. Abradable layer 14 includes porosity between about 25 vol. % and about 50 vol. %. In some examples, abradable layer 14 includes porosity between about 35 vol. % and about 45 vol. %, or about 40 vol. %. Porosity of abradable layer 14 is defined herein as a volume of pores or cracks in abradable layer 14 divided by a total volume of abradable layer 14 (including both the volume of material in abradable layer 14 and the volume of pores/cracks in abradable layer 14).

Abradable layer 14 may be formed over or formed directly on substrate 12 using, for example, a thermal spraying technique, such as, for example, plasma spraying. Porosity of abradable layer 14 may be controlled by the use of coating material additives and/or processing techniques to create the desired porosity. In some embodiments, substantially closed pores may be desired.

For example, a coating material additive that melts or burns at the use temperatures of the component (e.g., a blade track) may be incorporated into the coating material that forms abradable layer 14. The coating material additive may include, for example, graphite, hexagonal boron nitride, or a polymer such as a polyester, and may be incorporated into the coating material prior to deposition of the coating material over substrate 12 to form abradable layer 14. The coating material additive then may be melted or burned off in a post-formion heat treatment, or during operation of the gas turbine engine, to form pores in abradable layer 14. The post-deposition heat-treatment may be performed at up to about 1150°C for a component having a substrate 12 that includes a superalloy, or at up to about 1500°C for a component having a substrate 12 that includes a CMC or other ceramic.

The coating material additive may be exposed to various processing techniques to increase the amount of additive that remains entrapped within abradable layer 14 after thermal spraying. In some embodiments, the coating material and coating material additive may undergo attrition ball milling to attach the particles of the coating material additive to particles of the coating material. In other embodiments, the coating material additive may be attached to the coating material with an organic binder, such as, for example, a cellular methyl carbonate (CMC), which may also contain sodium or carbon. The use or processing techniques to improve the amount of additive that remains entrapped within abradable layer 14 after thermal spraying may improve at least one of the extent of porosity and the uniformity of porosity in abradable layer 14.

The porosity of abradable layer 14 can also be created and/or controlled by plasma spraying the coating material using a co-spray process technique in which the coating material and coating material additive are fed into the plasma stream with two radial powder feed injection ports. The feed pressures and flow rates of the coating material and coating material additive may be adjusted to inject the material on the outer edge of the plasma plume using direct 90 degree angle injection. This may permit the coating material particles to soften but not completely melt and the coating material additive to not burn off but rather soften sufficiently for adherence in abradable layer 14.

In some embodiments, the porosity of abradable layer 14 may be controlled to vary throughout at least a portion of abradable layer 14. For example, the porosity of abradable layer may be controlled to be lower in a portion of abradable layer 14 closer to a surface of substrate 12 and greater in a portion of abradable layer further from the surface of substrate 12.

Abradable layer 14 may be formed to a range of thicknesses depending on various considerations. One consideration may be a predicted size change of components (e.g., a gas turbine blade and a blade track on which abradable layer 14 is formed) at a low operating temperature or temperatures when the turbine engine is not operating and a maximum operating temperature. For example, thermal expansion of the gas turbine blade may be expected to reduce the distance between the blade tip and substrate 12. In this example, the thickness of abradable layer 14 may be selected to be substantially equal to or greater than the predicted difference in the distance between the blade tip and substrate 12 at low operating temperatures and high operating temperatures. This may allow contact and formation of a seal between the blade tip and the blade track or blade shroud at substantially all operating temperatures, which may improve efficiency of the gas turbine engine throughout its operational temperature range.

In some embodiments, abradable layer 14 may be formed to a thickness of less than about 0.1 inches (about 2.5 mm). In other embodiments, abradable layer 14 may be formed to a thickness of between about 0.030 inches and about 0.060 inches (between about 0.76 mm and about 1.524 mm). In some embodiments, abradable layer 14 may be formed to a thickness approximately equal to or greater than the desired final thickness and may be machined to the desired final thickness.

As described briefly above, abradable layer 14 may be formed over substrate 12 with one or more layers or coatings between abradable layer 14 and substrate 12. FIGS. 2-8 illustrate examples of layers that may be formed over substrate 12 with abradable layer 14. Although the different layers will be described in separate embodiments, it will be understood that, in some examples, two or more of the additional layers may be formed over substrate 12 with abradable layer 14. The different layers may be used in any combination, and may be formed over substrate 12 in any order.

In some examples, abradable layer 14 may be formed over a bond layer, which is formed over substrate 12. FIG. 2 is a cross sectional diagram that illustrates an example of an article 20 that includes a bond layer 22 formed on substrate 12 and an abradable layer 14 formed on bond layer 22.

Bond layer 22 may improve adhesion between substrate 12 and abradable layer 14. Bond layer 22 may include any useful material that improves adhesion between substrate 12 and abradable layer 14. In some examples, as described below, an article may include additional layers between bond layer 22 and abradable layer 14. In such examples, the composition of bond layer 22 may be selected to increase adhesion between substrate 12 and the layer that is formed on bond layer 22.

For example, when substrate 12 is a superalloy, bond layer 22 may include an alloy, such as an MCrAlY alloy (where M is Ni, Co, or NiCo), a β-NiAl nickel aluminide alloy (either unmodified or modified by Pt, Cr, Hf, Zr, Y, Si, and combinations thereof), a γ-Ni + y'-Ni3Al nickel aluminide alloy (either unmodified or modified by Pt, Cr, Hf, Zr, Y, Si, and combination thereof), or the like.

In embodiments where substrate 12 is a ceramic or CMC, bond layer 22 may include a ceramic or another material that is compatible with the substrate 12. For example, bond layer 22 may include mullite (aluminum silicate, Al₆Si₂O₁₃), silicon, silica, a silicide, or the like. Bond layer 22 may further include other elements, such as silicates of rare earth elements (i.e., a rare earth silicate) including Lu (lutetium), Yb (ytterbium), Tm (thulium), Er (erbium), Ho (holmium), Dy (dysprosium), Tb (terbium), Gd (gadolinium), Eu (europium), Sm (samarium), Pm (promethium), Nd (neodymium), Pr (praseodymium), Ce (cerium), La (lanthanum), Y (yttrium), or Sc (scandium). Some preferred compositions of a bond layer 22 formed on a substrate 12 formed of a ceramic or CMC include silicon, mullite, an yttrium silicate or an ytterbium silicate.

The composition of bond layer 22 may be selected based on a number of considerations, including the chemical composition and phase constitution of substrate 12 and the layer overlying bond layer 22 (in FIG. 2, abradable layer 14). For example, when substrate 12 includes a superalloy with a γ-Ni + y'-Ni3Al phase constitution, bond layer 22 preferably includes a γ-Ni + γ'-Ni₃Al phase constitution to better match the coefficient of thermal expansion of the superalloy substrate 12. This may increase the mechanical stability (adhesion) of the bond layer 22 to the substrate 12. Alternatively, when substrate 12 includes a CMC, bond layer 22 may be silicon or a ceramic, for example, mullite.

In some embodiments, a bond layer 22 that includes a single layer does not fulfill all the functions desired of bond layer 22. Thus, in some cases, bond layer 22 includes multiple layers. For example, in some embodiments where substrate 12 is a CMC comprising silicon carbide, bond layer 22 includes a layer of silicon formed on substrate 12 followed by a layer of mullite (aluminum silicate, Al₆Si₂O₁₃), a rare earth silicate, or a mullite/rare earth silicate dual layer formed on the layer of silicon. A bond layer 22 that includes multiple layers may be desirable when substrate 12 includes a CMC to accomplish the multiple desired functions of bond layer 22, such as, for example, adhesion of substrate 12 to abradable layer 14, chemical compatibility of bond layer 22 with each of substrate 12 and abradable layer 14, a desirable CTE match between adjacent layers, or the like.

Bond layer 22 may be formed on substrate 12 using, for example, chemical vapor deposition (CVD); physical vapor deposition (PVD), including electron beam-PVD (EB-PVD) and directed vapor deposition (DVD); plasma spraying or another thermal spraying process, or the like.

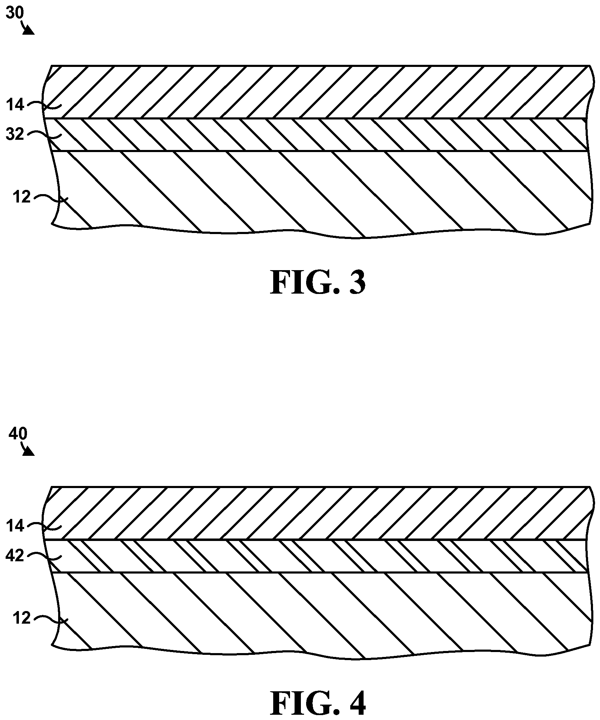

In some embodiments, an article may include another layer between substrate 12 and abradable layer 14, in addition to or as alternative to bond layer 22. FIG. 3 is a conceptual cross-sectional diagram that illustrates an example of an article 30 that includes an environmental barrier layer 32 formed on substrate 12 and abradable layer 14 formed on environmental barrier layer 32.

Environmental barrier layer 32 is a layer which reduces or prevents attack of the substrate 12 by chemical species present in the environment in which article 30 is utilized, e.g., in the intake gas or exhaust gas of a gas turbine engine. For example, environmental barrier layer 32 may include a material that is resistant to oxidation or water vapor attack. Exemplary materials for use in environmental barrier layer 32 include mullite; glass ceramics such as barium strontium aluminosilicate (BaO-SrO-Al₂O₃-2SiO₂; BSAS), calcium aluminosilicate (CaAl₂Si₂O₈; CAS), cordierite (magnesium aluminosilicate), and lithium aluminosilicate; and rare earth silicates (silicates of Lu, Yb, Tm, Er, Ho, Dy, Tb, Gd, Eu, Sm, Pm, Nd, Pr, Ce, La, Y, or Sc). The rare earth silicate may be a rare earth mono-silicate (RE₂SiO₅, where RE stands for "rare earth") or a rare earth disilicate (RE₂Si₂O₇, where RE stands for "rare earth"). In some embodiments, environmental barrier layer 32 is formed as a substantially non-porous layer, while in other embodiments, environmental barrier layer 32 is formed as a layer that includes a plurality of cracks. Environmental barrier layer 32 may be formed using, for example, CVD; PVD, including EB-PVD and DVD; plasma spraying or another thermal spraying process, or the like. In some embodiments, environmental barrier layer 32 may comprise a thickness between about 0.001 (about 0.0254 mm) and about 0.1 inch (about 2.54 mm). In some preferred embodiments, environmental barrier layer 32 may comprise a thickness between about 0.003 inch (about 0.0762 mm) and about 0.05 inch (about 1.27 mm).

Although not shown in FIG 3, in some examples, article 30 may include a bond layer 22 formed on substrate 12, and environmental barrier layer 32 may be formed over or on bond layer 22.

FIG. 4 is a conceptual cross-sectional diagram that illustrates an example of an article 40 that includes a CMAS-resistant layer 42 formed on substrate 12 and abradable layer 14 formed on CMAS-resistant layer 42. CMAS-resistant layer 42 protects substrate 12 from attack by molten CMAS.

CMAS-resistant layer 42 includes an element or compound that reacts with CMAS to form a solid or a highly-viscous reaction product (i.e., a reaction product that is a solid or highly viscous at the temperatures experienced by article 40). In some embodiments, CMAS-resistant layer 42 includes alumina and at least one rare earth oxide, such as, for example, an oxide of at least one of Sc, Y, La, Ce, Pr, Nd, Pm, Sm, Eu, Gd, Tb, Dy, Ho, Er, Tm, Yb, Lu, and combinations thereof. The combination of alumina and at least one rare earth oxide may allow tailoring of one or more properties of CMAS-resistant layer 42, such as, for example, the chemical reactivity of CMAS-resistant layer 42 with CMAS, the viscosity of the reaction products, the coefficient of thermal expansion (CTE) of CMAS-resistant layer 42, the chemical compatibility of CMAS-resistant layer 42 with substrate 12 and abradable layer 14, or the like.

In some embodiments, CMAS-resistant layer 42 is essentially free of zirconia and hafnia. That is, in these embodiments, CMAS-resistant layer 42 includes at most trace amounts of zirconia and hafnia, such as, for example, the amounts present in commercially-available rare earth oxides.

In some embodiments, CMAS-resistant layer 42 includes silica in addition to the alumina and at least one rare earth oxide. Silica can be added to CMAS-resistant layer 42 to allow further manipulation of the properties of CMAS-resistant layer 42, such as, for example, the chemical reactivity, viscosity of the reaction products, the CTE, the chemical compatibility of CMAS-resistant layer 42 with substrate 12 and abradable layer 14, or the like.

Further, in some embodiments, CMAS-resistant layer 42 optionally includes other additive components, such as, for example, TiO₂, Ta₂O₅, HfSiO₄, alkali oxides, alkali earth oxides, or mixtures thereof. The additive components may be added to CMAS-resistant layer 42 to modify one or more desired properties of CMAS-resistant layer 42. For example, the additive components may increase or decrease the reaction rate of CMAS-resistant layer 42 with CMAS, may modify the viscosity of the reaction product from the reaction of CMAS and CMAS-resistant layer 42, may increase adhesion of the CMAS-resistant layer 42 to the substrate 12 and/or abradable layer 14, may increase or decrease the chemical stability of CMAS-resistant layer 42, or the like.

CMAS-resistant layer 42 may include up to about 99 mol. % of the at least one rare earth oxide, ± 1 mol. %, and up to about 90 mol. % of alumina, with a total of 100 mol. %. In some embodiments, CMAS-resistant layer 42 may also include up to about 90 mol. % of silica. In some embodiments, CMAS-resistant layer 42 may additionally include up to about 50 mol. % of at least one of TiO₂, Ta₂O₅, HfSiO₄, an alkali oxide, or an alkali earth oxide.

In some embodiments, CMAS-resistant layer 42 includes between about 20 mol. % and about 80 mol. % of at least one rare earth oxide, between about 5 mol. % and about 50 mol. % alumina, and, optionally, between about 5 mol. % to about 50 mol. % of silica. In some embodiments, CMAS-resistant layer 42 may additionally include between about 0.1 mol. % and about 30 mol. % of at least one of TiO₂, Ta₂O₅, HfSiO₄, an alkali oxide, or an alkali earth oxide.

As described above, CMAS-resistant layer 42 reacts with CMAS that reaches layer 20 to form a solid or highly viscous reaction product. The reaction product may have a melting temperature significantly higher than CMAS (e.g., higher than about 1200-1250°C). A solid or highly viscous reaction product is desired because the CMAS-resistant layer 42 is consumed as it reacts with CMAS. If, for example, the reaction product of CMAS-resistant layer 42 and CMAS was a relatively low viscosity liquid, the low viscosity liquid would contact substrate 12 once the CMAS-resistant layer 42 is consumed by the reaction, which is the very occurrence the CMAS-resistant layer 42 is designed to prevent.

If the reaction product is a solid or highly viscous, however, a reaction layer will form on the surface of CMAS-resistant layer 42, which will lower the reaction rate of the CMAS with CMAS-resistant layer 42. That is, once a solid or highly viscous reaction layer forms on the surface of CMAS-resistant layer 42, the reaction between CMAS-resistant layer 42 and CMAS will slow, because any further reaction will require the diffusion of CMAS through the reaction layer to encounter the CMAS-resistant layer 42, or diffusion of a component of CMAS-resistant layer 42 through the reaction layer to encounter the CMAS. In either case, the diffusion of either CMAS or the component of CMAS-resistant layer 42 is expected to be the limiting step in the reaction once a solid or highly viscous reaction layer is formed on the surface of CMAS-resistant layer 42, because diffusion will be the slowest process.

Additionally, abradable layer 14 may reduce a rate at which CMAS and CMAS-resistant layer 42 react by reducing the rate at which CMAS comes into contact with CMAS-resistant layer 42. Similar to a solid or highly viscous reaction layer formed on CMAS-resistant layer 42, abradable layer 14 may function as a layer through which CMAS must pass in order to come into contact with CMAS-resistant layer 42. This reduction in effective reaction rate may prolong the life of CMAS-resistant layer 42 and increase the protection afforded by CMAS-resistant layer 42 to substrate 12 or another underlying layer compared to an article 40 which does not include an abradable layer 14 over CMAS-resistant layer 42. As described above, abradable layer 14 may include a composition that does not readily react with CMAS, which may provide further protection from CMAS to substrate 12 or another underlying layer. Accordingly, the combination of the presence of abradable layer 14 and the formation of a solid or highly viscous reaction product from the reaction of CMAS-resistant layer 42 and CMAS may substantially prevent contact of molten CMAS with substrate 12 or another layer underlying CMAS-resistant layer 42 (e.g., bond layer 22 or environmental barrier layer 32).

The thickness of CMAS-resistant layer 42 may vary widely depending on the conditions under which article 40 is to be used. For example, if CMAS deposits are expected to be extensive, CMAS-resistant layer 42 may be thicker than if CMAS deposits are expected to be limited. The thickness of CMAS-resistant layer 42, depending on the intended application, may range from about 0.1 mils (about 0.00254 millimeters (mm); 1 mil = 0.001 inch) to about 60 mils, ± 0.1 mil (about 1.524 mm ± 0.00254 mm). In some embodiments, the thickness of CMAS-resistant layer 42 may range from about 0.1 mils (about 0.00254 mm) to about 30 mils (about 0.762 mm). In other embodiments, the thickness of CMAS-resistant layer 42 may range from about 0.5 mils (about 0.0127 mm) to about 15 mils (about 0.381 mm).

In some embodiments, it may be preferred that the coefficient of thermal expansion of CMAS-resistant layer 42 is similar to the coefficient of thermal expansion (CTE) of substrate 12 and/or abradable layer 14. Thus, the coefficient of thermal expansion of the constituents of CMAS-resistant layer 42 may be an important consideration when designing CMAS-resistant layer 42. Table 1 shows some exemplary rare earth silicates (e.g., a rare earth oxide mixed with silica (SiO₂)) and their corresponding CTEs.

**Table 1: Coefficients of Thermal Expansion for Various Rare Earth Oxides**

| **Rare Earth Silicate** | **Nd₂SiO₅** | **Gd₂SiO₅** | **Dy₂SiO₅** | **Yb₂SiO₅** | **Lu₂SiO₅** | **Yb₂Si₂O₇** |
|---|---|---|---|---|---|---|
| **CTE (10⁻⁶/°C)** | 9.9 | 10.1 | 8.5 | 8 | 7.9 | 5.2 |

The exemplary rare earth silicates shown in Table 1 have CTEs that differ by as much as a factor of two (e.g., Gd₂SiO₅ (Gd₂O₃ + SiO₂) and Yb₂Si₂O₇ (Yb₂O₃ + 2SiO₂)). This permits a relatively wide range of tailoring of the CTE of CMAS-resistant layer 42.

CMAS-resistant layer 42 is formed on substrate 12 using any suitable coating fabrication technique, including, for example, plasma spraying, PVD, CVD, or a slurry process. In some embodiments, CMAS-resistant layer 42 is formed on substrate 12 using DVD.

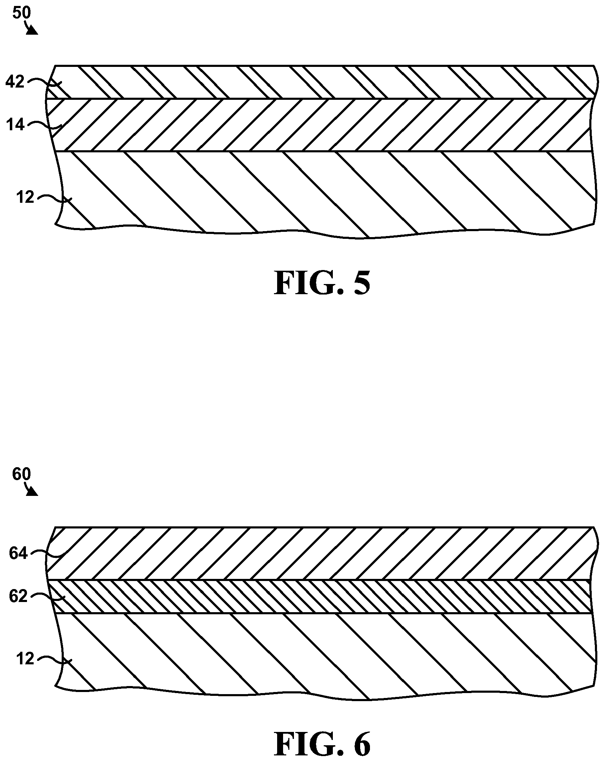

In some examples, instead of or in addition to a CMAS-resistant layer 42 formed under abradable layer 14 (i.e., abradable layer 14 is formed over CMAS-resistant layer 42), an article may include a CMAS-resistant layer 42 formed over abradable layer 14. FIG. 5 is a conceptual cross-sectional diagram that illustrates an example of an article 50 that includes abradable layer 14 formed on substrate 12 and CMAS-resistant layer 42 formed on abradable layer 14.

In such a configuration, CMAS-resistant layer 42 may provide protection from CMAS to abradable layer 14. For example, CMAS-resistant layer 42 may reduce or substantially prevent infiltration of CMAS into pores or cracks in abradable layer 14. This may reduce mechanical strain on abradable layer 14 due to filling of the pores or cracks with material having a different CTE than abradable layer 14, which may result in differential expansion and contraction of the materials during heating and cooling of article 50. Additionally, maintaining the pores and/or cracks of abradable layer 14 substantially free from CMAS may maintain the tendency of abradable layer 14 to break when exposed to sufficient mechanical stresses, e.g., due to contact with a blade tip, and thus may maintain functionality of abradable layer 14.

Although not shown in FIGS. 4 and 5, in some examples, CMAS-resistant layer 42 may be utilized with another additional layer described herein, such as bond layer 22, environmental barrier layer 32, or a layer described with reference to FIGS. 6-8. Additionally or alternatively, an article may include at least two CMAS-resistant layers 42, such as a first CMAS-resistant layer formed over substrate 12, abradable layer 14 formed on the first CMAS-resistant layer, and a second CMAS-resistant layer formed on abradable layer 14.

In some examples, abradable layer 14 may be utilized with a second abradable layer having a different composition than abradable layer 14. FIG. 6 is a conceptual cross-sectional diagram that illustrates an example of an article 60 that includes a first abradable layer 62 formed on a substrate and a second abradable layer 64 formed on first abradable layer 62. For sake of clarity, first abradable layer 62 in FIG. 6 will be described as having a different composition, while second abradable layer 64 will be described as having a composition and physical configuration similar to those described with respect to abradable layer 14. However, it will be appreciated that in other examples, the compositions may be switched; that is, the abradable layer closer to substrate 12 may have the composition of abradable layer 14 and the abradable layer further from substrate 12 may have the different composition.

First abradable layer 62 may include at least one rare earth silicate. The rare earth silicate may include a silicate of at least one of Lu, Yb, Tm, Er, Ho, Dy, Tb, Gd, Eu, Sm, Pm, Nd, Pr, Ce, La, Y, or Sc. The rare earth silicate may include a rare earth monosilicate, which has the chemical formula RE₂O₃-SiO₂ or, equivalently, RE₂SiO₅, where RE is a rare earth element, may include a rare earth disilicate, which has the formula RE₂O₃-2SiO₂ or, equivalently, RE₂Si₂O₇, where RE is a rare earth element, or may include a mixture of both rare earth monosilicate and rare earth disilicate. A rare earth monosilicate may be formed by a chemical reaction between one silica molecule and one rare earth oxide molecule, while a rare earth disilicate may be formed by a chemical reaction between two silica molecules and one rare earth oxide molecule.

In some embodiments, first abradable layer 62 may include a mixture of rare earth monosilicate and rare earth disilicate. For example, first abradable layer 62 may include a predominance of rare earth monosilicate when a rare earth oxide and silica are present in approximately a 1:1 molar ratio, but may still include some rare earth disilicate. Similarly, first abradable layer 62 may include a predominance of rare earth disilicate when a rare earth oxide and silica are present in approximately a 1:2 molar ratio, but may still include some rare earth monosilicate.

In addition, first abradable layer 62 may further include a silica (SiO₂) molecule that is not associated with a rare earth oxide molecule, a rare earth oxide molecule that is not associated with a silica molecule, or both. For example, when the at least one rare earth oxide and silica are present in a rare earth oxide-to-silica ratio less that approximately 1:2, first abradable layer 62 may include solitary silica (i.e., silica not associated with a rare earth oxide). As another example, when the ratio of rare earth oxide-to-silica is greater than approximately 1:1, first abradable layer 62 may include solitary rare earth oxide (i.e., rare earth oxide not associated with silica).

First abradable layer 62 may further include other, optional, additive elements or compounds. The additive elements or compounds may modify the mechanical and/or chemical properties of first abradable layer 62, such as, for example, a coefficient of thermal expansion of first abradable layer 62, or a chemical or mechanical compatibility of first abradable layer 62 with an adjacent layer, such as substrate 12. The additive elements may include, for example, alumina, TiO₂, Ta₂O₅, HfSiO₄, alkali oxides, alkali earth oxides, or mixtures thereof.

First abradable layer 62 may be formed over or formed directly on substrate 12 using, for example, a thermal spraying technique, such as, for example, plasma spraying. Porosity of first abradable layer 62 may be controlled by the use of coating material additives and/or processing techniques to create the desired porosity. In some embodiments, substantially closed pores may be desired.

For example, a coating material additive that melts or burns at the use temperatures of the component (e.g., a blade track) may be incorporated into the coating material that forms first abradable layer 62, as described above with respect to abradable layer 14 (FIG. 1). The coating material additive may include, for example, graphite, hexagonal boron nitride, or a polymer such as a polyester, and may be incorporated into the coating material prior to deposition of the coating material over substrate 12 to form first abradable layer 62. The coating material additive then may be melted or burned off in a post-deposition heat treatment, or during operation of the gas turbine engine, to form pores in first abradable layer 62. In some examples, the porosity of first abradable layer 62 can additionally or alternatively be created and/or controlled by plasma spraying the coating material using a co-spray process technique in which the coating material and coating material additive are fed into the plasma stream with two radial powder feed injection ports.

First abradable layer 62 may include porosity between about 25 vol. % and about 50 vol. %. In some examples, the porosity of first abradable layer 62 may be between about 35 vol. % and about 45 vol. %, or about 40 vol. %.

The total thickness of first abradable layer 62 and second abradable layer 64 may be selected depending on various considerations. One consideration may be a predicted size change of components (e.g., a gas turbine blade and a blade track on which abradable layer 14 is formed) at a low operating temperature or temperatures when the turbine engine is not operating and a maximum operating temperature, as described above.

In some embodiments, a combined thickness of first abradable layer 62 and second abradable layer 64, measured in a direction substantially normal to a surface of substrate 12, may be up to about 0.1 inches (about 2.5 mm). In other embodiments, the combined thickness of first abradable layer 62 and second abradable layer 64 may be between about 0.030 inches and about 0.040 inches (between about 0.76 mm and about 1.02 mm).

In some examples, an article may include three dimensional features formed in a substrate or a layer formed on the substrate. The three dimensional features may improve adherence between the substrate and a layer or layers formed on the substrate. For example, abradable layer 14 may be exposed to mechanical stresses due to contact with a blade tip and/or may be exposed to thermal stresses due to widely varying temperatures during use and non-use of the component on which abradable layer 14 is formed. The mechanical and/or thermal stresses may lead to crack formation in abradable layer 14 and/or at an interface of substrate 12 and abradable layer 14. Over time, the cracks may grow, and may eventually lead to spallation of a portion of abradable layer 14 from substrate 12. This may leave an area of substrate 12 exposed to elevated temperatures that may be harmful to substrate 12, and may lead to a gap between a blade tip and substrate 12.

The features disrupt the relative planarity of the surface of substrate 12 and impede crack growth or propagation in abradable layer 14. In particular, when a crack forms in abradable layer 14 and begins to propagate in a plane substantially parallel to the surface of substrate 12, the features serve as an impediment to further crack growth by presenting an interface between two materials, e.g., substrate 12 and abradable layer 14, across which the crack would be required to grow. In effect, the features segregate substrate 12 and abradable layer 14 into a plurality of smaller domains. Crack growth may occur within individual domains, but the features hinder crack growth between adjacent domains.

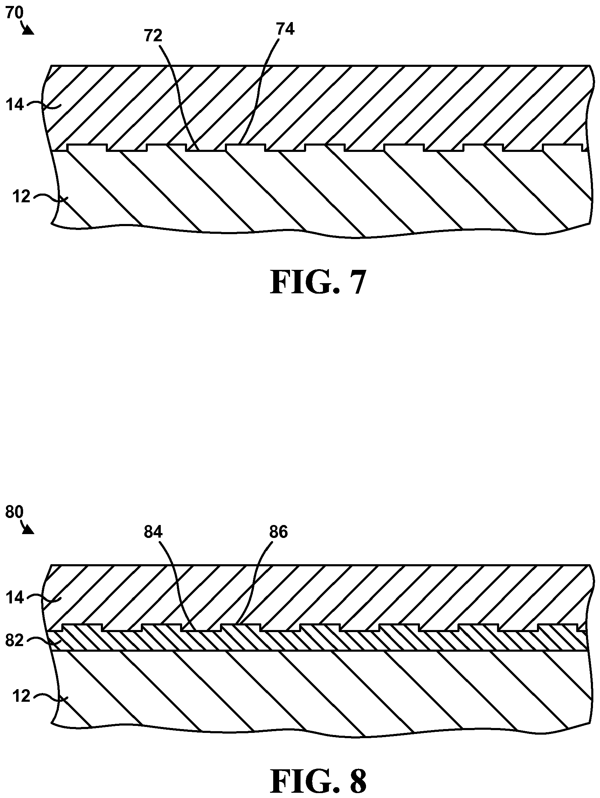

FIG. 7 is a conceptual cross-sectional diagram that illustrates an example of an article 70 that includes features 74 formed on a surface 72 of substrate 12 and abradable layer 14 formed on substrate 12. Features 74 may comprise depressions formed in surface 72, and may be formed by, for example, ultrasonic machining, water jet machining, chemical etching, photolithography, laser machining, electrochemical machining, electro-discharge machining, micromachining, vibropeening, or the like.

Each of the features 74 disrupts the relative planarity of surface 72, e.g., each of features 74 may form a discontinuity in surface 72. Features 74 may impede crack growth in abradable layer 14 in a plane parallel to surface 72. While not wishing to be bound by theory, features 74 may result in an interface between substrate 12 and abradable layer 14 across which a crack would need to propagate to grow from a portion of abradable layer 14 located in a feature 74 to a portion of abradable layer 14 located on a plateau of surface 72. The transition between dissimilar materials, e.g., substrate 12 and abradable layer 14, may impede crack growth across the interface of the two materials, and may contain crack growth to a single domain, e.g., a portion of abradable layer 14 located in a feature 74 or a portion of abradable layer 14 located on a plateau of surface 72. Accordingly, even if a crack grows to the extent that a portion of abradable layer 14 delaminates from substrate 12, the portion of abradable layer 14 that delaminates may be substantially limited to a portion above a feature 74 or a portion above a plateau of surface 72.

Features 74 may include a generally rectangular cross-section, as shown in FIG. 7, or may include another cross-sectional profile. For example, features 74 may include a generally arcuate cross-section, such as a half-circle or another, lesser, portion of a circle. In other examples, features 74 may include a generally triangular cross-section, a generally trapezoidal cross-section, or a truncated arcuate cross-section. Such cross-sectional profiles are merely examples; other cross-sectional profiles are also possible and will be apparent to those of ordinary skill in the art. Each of features 74 may have the same cross-sectional profile, or at least one of features 74 may have a different cross-sectional profile than another one of features 74.

Features 74 may include substantially continuous features or discrete features. For example, features 74 may include grooves (e.g., linear or sinusoidal), ridges, discrete depressions, or discrete protrusions. Discrete depressions or discrete protrusions may include, for example, circular depressions or protrusions, hexagonal depressions or protrusions, and/or elliptical depressions or protrusions.

In some embodiments, each of features 74 may be approximately the same width or size. In other embodiments, one or more features 74 may be a different width or size than at least one other of features 74.

Adjacent features 74 may be spaced approximately evenly apart, or may be spaced different distances apart. The distance between adjacent features 74 may be referred to as pitch. In some examples, the pitch may increase or decrease monotonically. In other examples, the pitch may increase and then decrease or may decrease and then increase. In yet other examples, the pitch may be approximately constant.

In some examples, such as in some cases when substrate 12 includes a CMC, features may be formed in a layer formed on substrate 12 instead of directly in substrate 12. In some examples, forming the features in a layer over substrate 12 may reduce a chance that reinforcement material in substrate 12 may be exposed during the formation of the features. FIG. 8 is a conceptual cross-sectional diagram that illustrates an example of an article 80 that includes a feature layer 82 formed on substrate 12, features 86 formed on a surface 84 of feature layer 82, and abradable layer 14 formed on feature layer 82.

In some examples, feature layer 82 may include the same material as matrix material of substrate 12 (when substrate 12 includes a ceramic or a CMC). Feature layer 82 may include, for example, silicon carbide, silicon nitride, alumina, silica, or the like. In this way, feature layer 82 may serve to increase a thickness of substrate 12 and provide a kind of buffer layer of matrix material above the reinforcement material in substrate 12. In some embodiments, feature layer 82 may be formed on substrate 12 during formation of substrate 12. In other embodiments, feature layer 82 may be formed on substrate 12 in a separate manufacturing step.

In other examples, feature layer 82 may include a different material than the matrix material in substrate 12. For example, feature layer 82 may be a bond coat (similar to bond layer 22 of FIG. 2), which serves to increase adhesion between substrate 12 and abradable layer 14. When comprising a bond coat, feature layer 82 may include any of the compositions described above with respect to bond layer 22 in reference to FIG. 2. The particular composition of feature layer 82 may be based on a number of considerations, including the chemical composition and phase constitution of substrate 12 and abradable layer 14.

Feature layer 82 includes features 86 formed on surface 84 of feature layer 82. Features 86 may include depressions or protrusions, as described above with respect to features 74 with reference to FIG. 7. Generally, features 86 may include characteristics similar to features 74 of article 70 in FIG. 7.

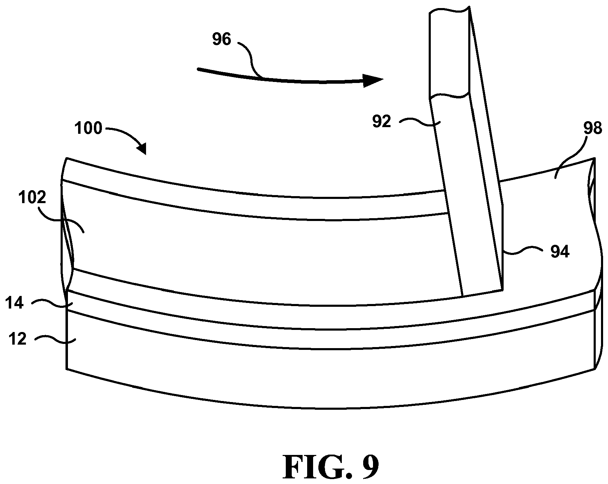

As described briefly above, abradable layer 14 is deposited as a porous layer, which is configured to be abraded when contacted by a gas turbine blade tip. For example, as depicted in the conceptual diagram illustrated in FIG. 9, a gas turbine blade track or gas turbine blade shroud 100 (hereafter blade track 100) may include substrate 12 and an abradable layer 14 deposited over substrate 12. FIG. 9 also illustrates a gas turbine blade 92, which includes a blade tip 94 that contacts a portion of abradable layer 14.

Blade tip 94 may include an abrasive coating or may not include an abrasive coating. In some embodiments, the abrasive coating may facilitate abrasion of abradable layer 14, and may protect blade tip 94 from damage from abradable layer 14. The abrasive coating may include, for example, cubic boron nitride or another coating with high fracture toughness and acceptable high temperature performance. However, a blade tip 94 including an abrasive coating may be more complex and thus more expensive than a blade tip 94 that does not include an abrasive coating. Accordingly, in some embodiments, blade tip 94 may not include an abrasive coating.

The contact between blade tip 94 and a portion of abradable layer 14 may be intentional for at least some of the temperatures experienced by blade track 100 and blade 92. For example, gas turbine blade 92 may experience thermal expansion when heated to its operating temperature from the temperature when the gas turbine engine is not in use. At the same time, the blade track 100 may also undergo thermal expansion when heated to the operating temperature. The thermal expansion experienced by turbine blade 92 and blade track 100 may result in a change in distance between substrate 12 of blade track 100 and blade tip 94. In some embodiments, the thickness of abradable layer 14 may be selected such that blade tip 94 approximately contacts surface 98 of abradable layer 14 at a low temperature, such as a minimum operating temperature or a temperature of the surrounding environment when the gas turbine engine is not operating. The thickness of abradable layer 14 may also be selected such that when turbine blade 92 and turbine track or turbine shroud 100 are at an operating temperature, blade tip 94 contacts and abrades at least a portion of abradable layer 14, but does not contact substrate 12.

As FIG. 9 illustrates, as blade 92 rotates in a direction indicated by arrow 96, blade tip 94 may contact a portion of abradable layer 14 and abrade a portion of layer 14 to form a groove 102 in abradable layer 14. The depth of groove 102 corresponds to the extent to which blade 92 extends into abradable layer 14. The depth of groove 102 may not be constant, as variations in fit between blade track 100 and turbine blade 92 may exist along the circumference of blade track 100.

Of course, in actual gas turbine engines, more than one blade is typically used. The gas turbine blades may follow substantially the same path along blade track 100 as the blades rotate during operation. However, the turbine blades may vary slightly in length or alignment, and thus may abrade different portions of abradable layer 14. Accordingly, groove 102 may be essentially a superposition of the grooves formed by each turbine blade 92. Because of this, the seal between a turbine blade 92 and abradable layer 14 may not be perfect, but may be improved compared to a seal between a turbine blade 92 and blade track 10 that does not include an abradable layer 14.

### EXAMPLE

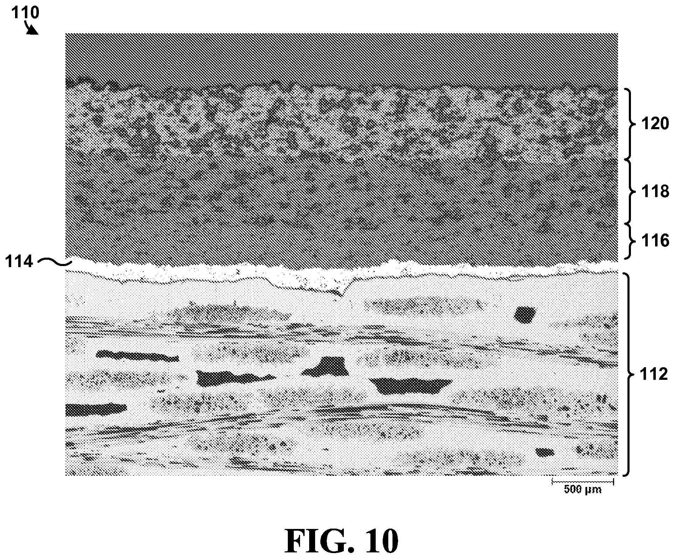

FIG. 10 is a cross-sectional micrograph that illustrates an article that includes an abradable layer in accordance with aspects of this disclosure. In particular, article 110 includes a substrate 112, a silicon bond layer 114 formed on substrate 112, and an environmental barrier layer 116 formed on silicon bond layer 114. Substrate 112 includes a SiC matrix reinforced with SiC fibers. Environmental barrier layer 116 includes ytterbium disilicate (Yb₂Si₂O₇). Article 110 further includes a first abradable layer 118 formed on environmental barrier layer 116. First abradable layer 118 includes ytterbium disilicate (Yb₂Si₂O₇). Finally, article 110 includes a second abradable layer 120 formed on first abradable layer 118. Second abradable layer 120 includes zirconia doped with ytterbia, samaria and gadolinia having tetragonal-prime and/or cubic crystalline phases.

FIG. 10 illustrates article 110 after being exposed to 100 hours of thermal cycling with 1 hours cycles. The thermal cycles were performed at about 1316°C and 90 % water, with a balance oxygen. The multilayer coating exhibited excellent resistance to cracking and delamination under thermal cycling and protected substrate 112 from water vapor.

## Claims

1. A system comprising:
a blade track or blade shroud (100) comprising:
a substrate (12), and
an abradable layer (14) formed over the substrate (12), wherein the abradable layer (14) comprises:
between 2 mol. % and 40 mol. % ytterbia,
between 0.5 mol. % and 20 mol. % samaria,
between 0.5 mol. % and 20 mol. % of at least one of lutetia, scandia, ceria, gadolinia, neodymia, or europia, and
a balance of at least one of zirconia or hafnia, wherein the abradable layer (14) is free from yttria, and wherein the abradable layer (14) comprises a porosity between 25 vol. % and 50 vol. %; and
a gas turbine blade (92) comprising a blade tip (94), wherein the blade track or blade shroud (100) and the gas turbine blade (92) are configured so the blade tip (94) contacts a portion of the abradable layer (14) during rotation of the gas turbine blade (92), and wherein the abradable layer (14) is configured to be abraded by the contact by the blade tip (94).

2. The system of claim 1, wherein the abradable layer (14) comprises at least one of a compound phase, a cubic crystalline phase, or a tetragonal-prime crystalline phase.

3. The system of claim 1 or 2, wherein the abradable layer (14) comprises between a porosity between 35 vol. % and 45 vol. %.

4. The system of any of claims 1 to 3, wherein the abradable layer (14) consists essentially of the at least one of zirconia or hafnia; ytterbia; samaria; and the at least one of lutetia, scandia, ceria, gadolinia, neodymia, or europia.

5. The system of any of claims 1 to 4, wherein the abradable layer (14) comprises a greater amount of ytterbia than samaria or the at least one of lutetia, scandia, ceria, gadolinia, neodymia, or europia.

6. The system of any of claims 1 to 5, further comprising an environmental barrier layer (32) formed over the substrate (12), wherein the abradable layer (14) is formed over the environmental barrier layer (32), and wherein the environmental barrier layer (32) comprises at least one of mullite, barium strontium aluminosilicate, calcium aluminosilicate, cordierite, lithium aluminosilicate, or a rare earth silicate.

7. The system of any of claims 1 to 6, further comprising a CMAS-resistant layer (42) formed over the substrate (12), wherein the CMAS-resistant layer (42) comprises alumina and at least one rare earth oxide.

8. The system of any of claims 1 to 7, wherein the abradable layer (14) comprises a first abradable layer (62), further comprising a second abradable layer (64) formed over the substrate (12), wherein the second abradable layer (64) comprises a rare earth silicate and a porosity between 25 vol. % and 50 vol. %.

9. The system of any of claims 1 to 8, wherein the substrate (12) includes a plurality of features (74) formed in the substrate (12).

10. The system of any of claims 1 to 9, further comprising a feature layer (82) formed on the substrate (12), wherein the feature layer (82) includes a plurality of features (86) formed in the feature layer (82).

11. A method comprising:
forming an abradable layer (14) over a substrate (12) of a blade track or a blade shroud (100) using a thermal spraying technique, wherein the abradable layer (14) comprises:
between 2 mol. % and 40 mol. % ytterbia,
between 0.5 mol. % and 20 mol. % samaria,
between 0.5 mol. % and 20 mol. % of at least one of lutetia, scandia, ceria, gadolinia, neodymia, or europia, and
a balance of at least one of zirconia or hafnia, wherein the abradable layer (14) is free from yttria, and wherein the abradable layer (14) comprises a porosity between 25 vol. % and 50 vol. %;
configuring a blade tip (94) of a gas turbine blade (92) relative to the blade track or blade shroud (100) so the blade tip (94) contacts a portion of the abradable layer (14) during rotation of the gas turbine blade (92); and
rotating the gas turbine blade (92) to cause the blade tip (94) to contact and abrade the portion of the abradable layer (14).

12. The method of claim 11, further comprising forming an environmental barrier layer (32) over the substrate (12), wherein forming the abradable layer (14) over the substrate (12) using the thermal spraying technique comprises forming the abradable layer (14) over the environmental barrier layer (32) using the thermal spraying technique.

13. The method of claim 11 or 12, further comprising forming a CMAS-resistant layer (42) over the substrate (12), wherein forming the abradable layer (14) over the substrate (12) using the thermal spraying technique comprises forming the abradable layer (14) over the CMAS-resistant layer (42) using the thermal spraying technique.

14. The method of any of claims 11 to 13, further comprising forming a plurality of features (74) in the substrate (12).

15. The method of any of claims 11 to 13, further comprising forming a feature layer (82) over the substrate (12) and forming features (86) in the feature layer (82), and wherein forming the abradable layer (14) over the substrate (12) using the thermal spraying technique comprises forming the abradable layer (14) over the feature layer (82) using the thermal spraying technique.

## Patentansprüche

1. System, umfassend:
eine Schaufelschiene oder Schaufeldeckbande (100), umfassend:
ein Substrat (12) und
eine über dem Substrat (12) geformte abreibbare Schicht (14), wobei die abreibbare Schicht (14) umfasst:
zwischen 2 Mol.-% und 40 Mol.-% Ytterbium,
zwischen 0,5 Mol.-% und 20 Mol.-% Samarium,
zwischen 0,5 Mol.-% und 20 Mol.-% von mindestens einem aus Lutetium, Scandium, Cerium, Gadolinium, Neodym oder Europium und
einem Rest aus mindestens einem aus Zirkonoxid oder Hafnium, wobei die abreibbare Schicht (14) frei von Yttrium ist und wobei die abreibbare Schicht (14) eine Porosität von zwischen 25 Vol.-% und 50 Vol.-% umfasst; und eine Gasturbinenschaufel (92), umfassend eine Schaufelspitze (94), wobei die Schaufelschiene oder Schaufeldeckbande (100) und die Gasturbinenschaufel (92) so konfiguriert sind, dass die Schaufelspitze (94) während der Drehung der Gasturbinenschaufel (92) einen Abschnitt der abreibbaren Schicht (14) kontaktiert und wobei die abreibbare Schicht (14) konfiguriert ist, um durch den Kontakt durch die Schaufelspitze (94) abgerieben zu werden.

2. System nach Anspruch 1, wobei die abreibbare Schicht (14) mindestens eine einer Verbindungsphase, einer kubischen Kristallinphase oder einer tetragonal-primären Kristallinphase umfasst.

3. System nach Anspruch 1 oder 2, wobei die abreibbare Schicht (14) eine Porosität zwischen 35 Vol.-% und 45 Vol.-% umfasst.

4. System nach einem der Ansprüche 1 bis 3, wobei die abreibbare Schicht (14) im Wesentlichen aus dem mindestens einen aus Zirkonoxid oder Hafnium; Ytterbium, Samarium; und dem mindestens einen aus Lutetium, Scandium, Cerium, Gadolinium, Neodym oder Europium besteht.

5. System nach einem der Ansprüche 1 bis 4, wobei die abreibbare Schicht (14) eine größere Menge Ytterbium als Samarium oder des mindestens einen aus Lutetium, Scandium, Cerium, Gadolinium, Neodym oder Europium umfasst.

6. System nach einem der Ansprüche 1 bis 5, ferner umfassend eine über dem Substrat (12) geformte Umgebungsbarriereschicht (32), wobei die abreibbare Schicht (14) über der Umgebungsbarriereschicht (32) geformt ist und wobei die Umgebungsbarriereschicht (32) mindestens eines aus Mullit, Barium-Strontium-Aluminiumsilikat, Calzium-Aluminiumsilikat, Cordierit, Lithium-Aluminiumsilikat oder ein Seltenerd-Silikat umfasst.

7. System nach einem der Ansprüche 1 bis 6, ferner umfassend eine CMAS-resistente Schicht (42), die über dem Substrat (12) geformt ist, wobei die CMAS-resistente Schicht (42) Aluminiumoxid und mindestens ein Seltenerd-Oxid umfasst.

8. System nach einem der Ansprüche 1 bis 7, wobei die abreibbare Schicht (14) eine erste abreibbare Schicht (62) umfasst, ferner umfassend eine über dem Substrat (12) geformte zweite abreibbare Schicht (64), wobei die zweite abreibbare Schicht (64) ein Seltenerd-Silikat und eine Porosität zwischen 25 Vol.-% und 50 Vol.-% umfasst.

9. System nach einem der Ansprüche 1 bis 8, wobei das Substrat (12) eine Vielzahl von im Substrat (12) geformten Merkmalen (74) enthält.

10. System nach einem der Ansprüche 1 bis 9, ferner umfassend eine auf dem Substrat (12) geformte Merkmalsschicht (82), wobei die Merkmalsschicht (82) eine Vielzahl von in der Merkmalsschicht (82) geformten Merkmalen (86) aufweist.

11. Verfahren, umfassend:
Formen einer abreibbaren Schicht (14) über einem Substrat (12) einer Schaufelschiene oder einer Schaufeldeckbande (100) mithilfe einer Thermosprühtechnik, wobei die abreibbare Schicht (14) umfasst:
zwischen 2 Mol.-% und 40 Mol.-% Ytterbium,
zwischen 0,5 Mol.-% und 20 Mol.-% Samarium,
zwischen 0,5 Mol.-% und 20 Mol.-% von mindestens einem aus Lutetium, Scandium, Cerium, Gadolinium, Neodym oder Europium und
einem Rest aus mindestens einem aus Zirkonoxid oder Hafnium, wobei die abreibbare Schicht (14) frei von Yttrium ist, und wobei die abreibbare Schicht (14) eine Porosität zwischen 25 Vol.-% und 50 Vol.-% umfasst;
Konfigurieren einer Schaufelspitze (94) einer Gasturbinenschaufel (92) relativ zur Schaufelschiene oder Schaufeldeckbande (100), so dass die Schaufelspitze (94) einen Abschnitt der abreibbaren Schicht (14) während der Drehung der Gasturbinenschaufel (92) kontaktiert; und
Drehen der Turbinenschaufel (92), um zu bewirken, dass die Schaufelspitze (94) den Abschnitt der abreibbaren Schicht (14) kontaktiert und abreibt.

12. Verfahren nach Anspruch 11, ferner umfassend Formen einer Umgebungsbarriereschicht (32) über dem Substrat (12), wobei das Formen der abreibbaren Schicht (14) über dem Substrat (12) mithilfe der Thermosprühtechnik das Formen der abreibbaren Schicht (14) über der Umgebungsbarriereschicht (32) mithilfe der Thermosprühtechnik umfasst.

13. Verfahren nach Anspruch 11 oder 12, ferner umfassend Formen einer CMAS-resistenten Schicht (42) über dem Substrat (12), wobei das Formen der abreibbaren Schicht (14) über dem Substrat (12) mithilfe der Thermosprühtechnik das Formen der abreibbaren Schicht (14) über der CMAS-resistenten Schicht (42) mithilfe der Thermosprühtechnik umfasst.

14. Verfahren nach einem der Ansprüche 11 bis 13, ferner umfassend das Formen einer Vielzahl von Merkmalen (74) im Substrat (12).

15. Verfahren nach einem der Ansprüche 11 bis 13, ferner umfassend Formen einer Merkmalsschicht (82) über dem Substrat (12) und Formen von Merkmalen (86) in der Merkmalsschicht (82), und wobei das Formen der abreibbaren Schicht (14) über dem Substrat (12) mithilfe der Thermosprühtechnik Formen der abreibbaren Schicht (14) über der Merkmalsschicht (82) mithilfe der Thermosprühtechnik umfasst.

## Revendications

1. Système comprenant :
un chemin de pale ou une bande de recouvrement de pale (100) comprenant :
un substrat (12), et
une couche abradable (14) formée sur le substrat (12), ladite couche abradable (14) comprenant :
entre 2 % en moles et 40 % en moles d'oxyde d'ytterbium,
entre 0,5 % en moles et 20 % en moles d'oxyde de samarium,
entre 0,5 % en moles et 20 % en moles d'au moins l'un de l'oxyde de lutétium, de l'oxyde de scandium, de l'oxyde de cérium, de l'oxyde de gadolinium, de l'oxyde de néodyme ou de l'oxyde d'europium, et
un reste d'au moins l'un de l'oxyde de zirconium ou de l'oxyde d'hafnium, ladite couche abradable (14) étant exempte d'oxyde d'yttrium, et ladite couche abradable (14) comprenant une porosité comprise entre 25 % en volume et 50 % en volume ; et
une pale de turbine à gaz (92) comprenant une extrémité de pale (94), ledit chemin de pale ou ladite bande de recouvrement de pale (100) et ladite pale de turbine à gaz (92) étant conçus de sorte que l'extrémité de pale (94) soit en contact avec une partie de la couche abradable (14) pendant la rotation de la pale de turbine à gaz (92), et ladite couche abradable (14) étant conçue pour être érodée par le contact réalisé par l'extrémité de pale (94).

2. Système selon la revendication 1, ladite couche abradable (14) comprenant au moins l'une d'une phase de composé, d'une phase cristalline cubique ou d'une phase cristalline tétragonale prime.

3. Système selon la revendication 1 ou 2, ladite couche abradable (14) comprenant une porosité comprise entre 35 % en volume et 45 % en volume.

4. Système selon l'une quelconque des revendications 1 à 3, ladite couche abradable (14) se composant essentiellement dudit au moins l'un de l'oxyde de zirconium ou de l'oxyde d'hafnium ; d'oxyde d'ytterbium ; d'oxyde de samarium ; et dudit au moins l'un de l'oxyde de lutétium, de l'oxyde de scandium, de l'oxyde de cérium, de l'oxyde de gadolinium, de l'oxyde de néodyme ou de l'oxyde d'europium.

5. Système selon l'une quelconque des revendications 1 à 4, ladite couche abradable (14) comprenant une plus grande quantité d'oxyde d'ytterbium que d'oxyde de samarium ou ledit au moins l'un de l'oxyde de lutétium, de l'oxyde de scandium, de l'oxyde de cérium, de l'oxyde de gadolinium, de l'oxyde de néodyme ou de l'oxyde d'europium.

6. Système selon l'une quelconque des revendications 1 à 5, comprenant en outre une couche barrière environnementale (32) formée sur le substrat (12), ladite couche abradable (14) étant formée sur la couche barrière environnementale (32), et ladite couche barrière environnementale (32) comprenant au moins l'un de la mullite, de l'aluminosilicate de strontium-baryum, de l'aluminosilicate de calcium, de la cordiérite, de l'aluminosilicate de lithium, ou un silicate de terre rare.

7. Système selon l'une quelconque des revendications 1 à 6, comprenant en outre une couche (42) résistant aux CMAS formée sur le substrat (12), ladite couche (42) résistant aux CMAS comprenant de l'alumine et au moins un oxyde de terre rare.

8. Système selon l'une quelconque des revendications 1 à 7, ladite couche abradable (14) comprenant une première couche abradable (62), comprenant en outre une seconde couche abradable (64) formée sur le substrat (12), ladite seconde couche abradable (64) comprenant un silicate de terre rare et une porosité comprise entre 25 % en volume et 50 % en volume.

9. Système selon l'une quelconque des revendications 1 à 8, ledit substrat (12) comportant une pluralité d'éléments (74) formés sur le substrat (12).

10. Système selon l'une quelconque des revendications 1 à 9, comprenant en outre une couche d'éléments (82) formée sur le substrat (12), ladite couche d'éléments (82) comportant une pluralité d'éléments (86) formée dans la couche d'éléments (82).

11. Procédé comprenant :
la formation d'une couche abradable (14) sur un substrat (12) d'un chemin de pale ou d'une bande de recouvrement de pale (100) à l'aide d'une technique de pulvérisation thermique, ladite couche abradable (14) comprenant :
entre 2 % en moles et 40 % en moles d'oxyde d'ytterbium,
entre 0,5 % en moles et 20 % en moles d'oxyde de samarium,
entre 0,5 % en moles et 20 % en moles d'au moins l'un de l'oxyde de lutétium, de l'oxyde de scandium, de l'oxyde de cérium, de l'oxyde de gadolinium, de l'oxyde de néodyme ou de l'oxyde d'europium, et
un reste d'au moins l'un de l'oxyde de zirconium ou de l'oxyde d'hafnium, ladite couche abradable (14) étant exempte d'oxyde d'yttrium, et ladite couche abradable (14) comprenant une porosité comprise entre 25 % en volume et 50 % en volume ;
la configuration d'une extrémité de pale (94) d'une pale de turbine à gaz (92) par rapport au chemin de pale ou à la bande de recouvrement de pale (100) de sorte que l'extrémité de pale (94) soit en contact avec une partie de la couche abradable (14) pendant la rotation de la pale de turbine à gaz (92) ; et
la rotation de la pale de turbine à gaz (92) pour inciter l'extrémité de pale (94) à entrer en contact avec la partie de la couche abradable (14) et l'éroder.

12. Procédé selon la revendication 11, comprenant en outre la formation d'une couche barrière environnementale (32) sur le substrat (12), ladite formation de la couche abradable (14) sur le substrat (12) à l'aide de la technique de pulvérisation thermique comprenant la formation de la couche abradable (14) sur la couche barrière environnementale (32) à l'aide de la technique de pulvérisation thermique.

13. Procédé selon la revendication 11 ou 12, comprenant en outre la formation d'une couche (42) résistant aux CMAS sur le substrat (12), ladite formation de la couche abradable (14) sur le substrat (12) à l'aide de la technique de pulvérisation thermique comprenant la formation de la couche abradable (14) sur la couche (42) résistant aux CMAS à l'aide de la technique de pulvérisation thermique.

14. Procédé selon l'une quelconque des revendications 11 à 13, comprenant en outre la formation d'une pluralité d'éléments (74) dans le substrat (12).

15. Procédé selon l'une quelconque des revendications 11 à 13, comprenant en outre la formation d'une couche d'éléments (82) sur le substrat (12) et la formation d'éléments (86) dans la couche d'éléments (82), et ladite formation de la couche abradable (14) sur le substrat (12) à l'aide de la technique de pulvérisation thermique comprenant la formation de la couche abradable (14) sur la couche d'éléments (82) à l'aide de la technique de pulvérisation thermique.
